Europäisches Patentamt

European Patent Office

Office européen des brevets

(11) Veröffentlichungsnummer : **0 099 095**
**B1**

(12) EUROPÄISCHE PATENTSCHRIFT

(45) Veröffentlichungstag der Patentschrift :
05.04.89

(21) Anmeldenummer : 83106779.8

(22) Anmeldetag : 11.07.83

(51) Int. Cl.⁴ : **B 60 N  1/06**

54 Fahrzeugsitz mit einer verstellbaren Schenkelstütze.

(30) Priorität : 13.07.82 DE 3226101

(43) Veröffentlichungstag der Anmeldung :
25.01.84 Patentblatt 84/04

(45) Bekanntmachung des Hinweises auf die Patenterteilung : 05.04.89 Patentblatt 89/14

(84) Benannte Vertragsstaaten :
DE FR GB IT

(56) Entgegenhaltungen :
FR-A- 2 401 795
FR-A- 2 482 021
GB-A- 2 040 674

(73) Patentinhaber : KEIPER RECARO GmbH & Co.
Büchelstrasse 54-58
D-5630 Remscheid 14 (DE)

(72) Erfinder : Göldner, Walter, Dipl.-Ing.(FH)
Fichtenweg 7
D-7306 Denkendorf (DE)

(74) Vertreter : Held, Martin, Dr.-Ing. et al
Patentanwälte Bartels, Fink, Held Lange Strasse 51
D-7000 Stuttgart 1 (DE)

## Beschreibung

Die Erfindung betrifft einen Fahrzeugsitz mit einer Schenkelstütze, bei dem

a) die Schenkelstütze relativ zu dem eine Rückenlehne tragenden hinteren Abschnitt des Sitzteils sowohl in Sitzlängsrichtung als auch um eine in Sitzquerrichtung verlaufende Achse verstellbar und in wählbarer Position feststellbar ist ;

b) das Polster der Schenkelstütze auf einem Polsterträger aufliegt, der um die in Querrichtung verlaufende Achse schwenkbar an einer Tragvorrichtung gelagert ist ;

c) die Tragvorrichtung von mindestens zwei mit dem Gestell des hinteren Abschnitts des Sitzteils fest verbundenen und von diesem nach vorne ragenden Trägern, die in einem Abstand nebeneinander und zueinander parallel verlaufen, längsverschiebbar und in wählbaren Positionen feststellbar getragen ist.

Ein Fahrzeugsitz dieser Art ist bereits bekannt, vgl. GB-A-2 040 674. Nachteilig ist bei dem bekannten Fahrzeugsitz, daß die Schenkelstütze sich nicht so individuell an die Statur oder an die besonderen Sitzgewohnheiten des Sitzbenutzers anpassen läßt, wie dies wünschenswert wäre. So ist bei dem bekannten Sitz die Schenkelstütze zwar sowohl hinsichtlich ihrer Neigung um die in Sitzquerrichtung verlaufende Achse verstellbar als auch in Sitzlängsrichtung verschiebbar, jedoch lassen sich die beiden Verstellmaßnahmen nicht unabhängig voneinander durchführen, weil eine bestimmte Längsverschiebung der Schenkelstütze immer zu einer konstruktiv vorgegebenen Neigungsänderung um die quer verlaufende Achse führt.

Der Erfindung liegt die Aufgabe zugrunde, einen Fahrzeugsitz der in Betracht stehenden Art zu schaffen, bei dem vielfältigere Verstellmöglichkeiten für die Schenkelstütze gegeben sind.

Bei einem Fahrzeugsitz der eingangs genannten Art ist diese Aufgabe erfindungsgemäß dadurch gelöst, daß zusätzlich zu den eingangs genannten Merkmalen a) bis c) die Merkmale vorgesehen sind, daß

d) der Polsterträger aus zwei nebeneinander angeordneten Polstertragkörpern besteht, von denen jeder ein vom Polster des anderen Polstertragkörpers getrenntes Polster trägt,

e) daß jeder Polstertragkörper an je einem von zwei nebeneinander angeordneten, von wenigstens je zwei der Träger getragenen Führungskörpern gelagert ist,

f) daß jeder Polstertragkörper an dem zugehörigen Führungskörper, vom anderen Polstertragkörper unabhängig, um die Querachse schwenkbar ist,

g) daß jeder Führungskörper mittels eines Rastmechanismusses, der am Führungskörper und am Polstertragkörper vorgesehene Rastelemente aufweist, unabhängig vom anderen Führungskörper in den wählbaren Schwenkstellungen festlegbar ist und

h) daß jeder der beiden Führungskörper eine ihn auf den Trägern in der gewählten Position haltende, lösbare Haltevorrichtung aufweist.

Dadurch ist nicht nur eine von der Längsverschiebung unabhängige Einstellung und Verrastung der Schenkelstütze in einer gewünschten Neigungslage bezüglich der quer verlaufenden Achse möglich, sondern es ist durch das Vorhandensein zweier unabhängig voneinander einstellbarer und feststellbarer Polstertragkörper mit je einem eigenen Polster eine je gesonderte und individuell angepaßte Unterstützung jedes Schenkels des Sitzbenutzers möglich. Dabei ist für jeden der beiden Polstertragkörper sowohl eine unabhängige Einstellung der Neigungslage bezüglich der quer verlaufenden Achse möglich, weil jeder Polstertragkörper einen mit dem zugehörigen Führungskörper zusammenwirkenden Rastmechanismus aufweist, sondern auch die Einstellung in Sitzlängsrichtung ist für jeden Polstertragkörper individuell wählbar, weil jeder der beiden Führungskörper eine mit den zugehörigen Trägern zusammenwirkende eigene Haltevorrichtung aufweist. Dadurch ist eine universelle Einstell- und Anpaßbarkeit der Schenkelstütze des erfindungsgemäßen Fahrzeugsitzes erreicht.

Bei einem vorteilhaften Ausführungsbeispiel ist vorgesehen, daß zu schwenkbaren Lagerung des Polstertragkörpers der Schenkelstütze an dem Führungskörper im einen dieser beiden Teile die Schwenkachse gelagert ist und der andere Teil die Schwenkachse drehbar und quer zu ihrer Längsachse verschiebbar aufnehmende Langlöcher aufweist und daß sich die Langlöcher in derjenigen Richtung erstrecken, in welcher der Polsterträger der Schenkelstütze relativ zur Tragvorrichtung zum Schließen und Öffnen des die ineinandergreifenden Rastelemente aufweisenden Rastmechanismusses zu bewegen ist. Bei diesem Ausführungsbeispiel ergibt sich der zusätzliche Vorteil der besonders einfachen Bedienbarkeit, weil der Benutzer, wenn er den Polsterträger zum Schwenken der Schenkelstütze ergreift, durch Bewegen des Polsterträgers sowohl den Rastmechanismus betätigen als auch die Neigungseinstellung der Schenkelstütze bewerkstelligen kann.

Vorzugsweise ist die Anordnung dabei so getroffen, daß sich die Langlöcher in Sitzlängsrichtung oder in einem spitzen Winkel zu dieser Richtung erstrecken und der Polsterträger der Schenkelstütze für ein Lösen des Rastmechanismusses entgegen der Kraft einer vorgespannten Rückholfeder in Richtung der Langlöcher vom hinteren Abschnitt des Sitzteils weg bewegbar ist. Bei diesem Ausführungsbeispiel ist die Bedienungsbequemlichkeit noch weiter erhöht, weil der Benutzer mit einer einzigen Maßnahme, nämlich durch Bewegen des Polsterträgers in Sitzlängsrichtung sowohl den Rastmechanismus für die Schwenklagerung betätigen als auch eine Längsverschiebung des Polsterträgers mit der Tragvorrichtung bewirken kann.

Die Erfindung wird nachfolgend anhand von in der Zeichnung dargestellten Ausführungsbeispielen im einzelnen erläutert.

Es zeigen :

Fig. 1 eine perspektivisch gezeichnete Ansicht eines Ausführungsbeispiels des Fahrzeugsitzes mit zweiteilig ausgebildeter Schenkelstütze ;

Fig. 2 einen in größerem Maßstab gezeichneten Schnitt längs der Linie II-II von Fig. 1 ;

Fig. 3 einen Schnitt längs der Linie III-III von Fig. 2 ;

Fig. 4 einen gegenüber Fig. 2 und 3 in kleinerem Maßstab gezeichneten Längsschnitt eines Polstertragkörpers der Schenkelstütze des Ausführungsbeispiels, wobei der Schnitt längs der Linie IV-IV von Fig. 3 geführt ist ;

Fig. 5 eine im gleichen Maßstab wie Fig. 4 gezeichnete Seitenansicht eines Führungskörpers für die Tragvorrichtung der Schenkelstütze des Ausführungsbeispiels und

Fig. 6 eine schematisch vereinfacht und abgebrochen gezeichnete Seitenansicht einer Schenkelstütze und des benachbarten Abschnitts des Sitzteils eines zweiten Ausführungsbeispiels des Fahrzeugsitzes.

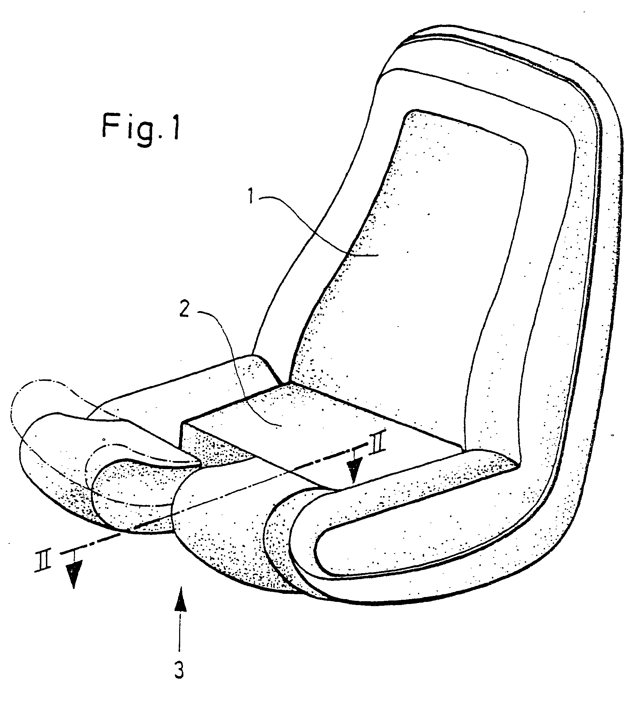

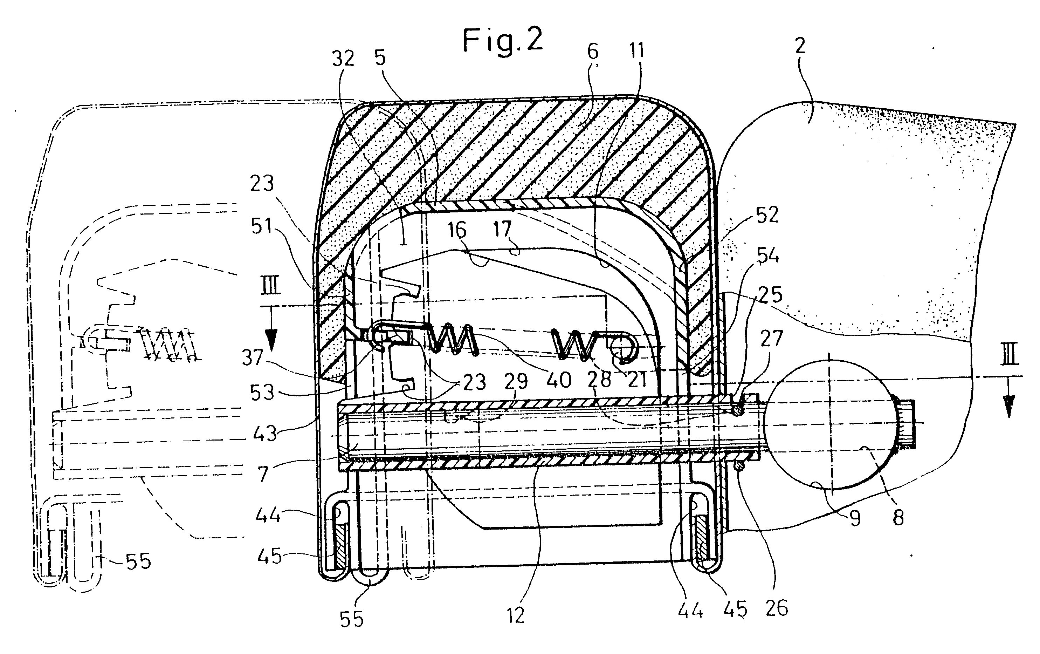

Fig. 1 zeigt einen Fahrzeugsitz, dessen Sitzteil einen zur Rückenlehne 1 benachbarten hinteren Abschnitt 2 und eine sich von diesem nach vorn erstreckende Schenkelstütze aufweist, deren als Ganzes mit 3 bezeichneter Polsterträger zweiteilig ausgebildet ist, wobei die beiden gleich gestalteten Teile unabhängig voneinander und unabhängig vom hinteren Abschnitt 2 des Sitzteils sowohl längsverschiebbar als auch in der Neigung verstellbar sind. Beide Teile des zweiteiligen Polsterträgers 3 sind gleich ausgebildet und in der gleichen Art und Weise mit dem Gestell des hinteren Abschnitts 2 des Sitzteils verbunden, so daß sich die nachfolgende, ins Einzelne gehende Beschreibung anhand der Fig. 2 bis 5 auf den Aufbau und die Anbringung nur eines der beiden Teile des Polsterträgers 3 beschränkt.

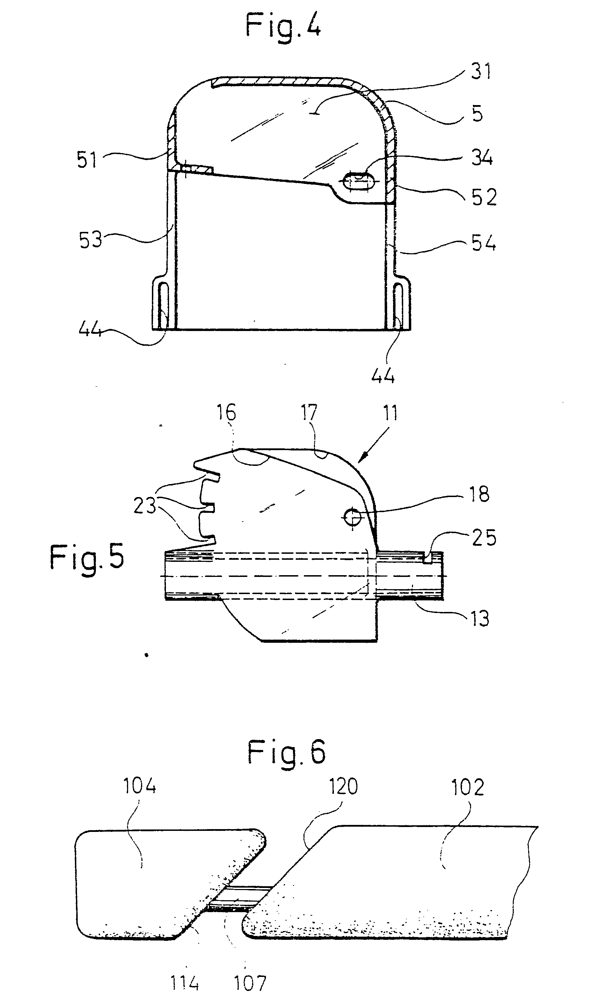

Jedes der beiden Teile des Polsterträgers 3 weist als Hauptbestandteil einen aus Kunststoff einstückig geformten Polstertragkörper 5 auf, der in Fig. 4 im Längsschnitt einzeln dargestellt ist. Der Polstertragkörper 5 besitzt im wesentlichen die Gestalt einer an den Ecken gerundeten Wanne mit nach abwärts gerichteter Öffnung, wobei die obenliegende Außenseite des Wannenbodens sowie die daran anschließenden Bereiche der Seitenflächen als Anlageflächen für ein passend geformtes Polster 6 aus einem Schaumstoff vorgesehen sind. Bevor weitere Einzelheiten der Gestaltung des Polstertragkörpers 5 beschrieben werden, wird nachstehend zunächst auf die Ausbildung der Tragvorrichtung eingegangen, die zur Halterung des Polstertragkörpers 5 vorgesehen ist.

Diese Tragvorrichtung ist mit dem Gestell des hinteren Abschnitts 2 des Sitzteils über Träger verbunden, die beim vorliegenden Ausführungsbeispiel durch je zwei in gegenseitigem Abstand zueinander parallel und in Sitzlängsrichtung verlaufende Stangen 7 gebildet sind, die mit ihren hinteren Endabschnitten 8 mit einer am vorderen Ende des hinteren Abschnitts 2 des Sitzteils angeordneten Traverse 9 durch Verschweißen oder Einpressen fest verbunden sind und von denen je zwei Stangen 7 jedem der beiden Polstertragkörper 5 zugeordnet sind. Die Tragvorrichtung weist für jeden Polstertragkörper 5 einen auf den beiden zugehörigen Stangen 7 verschiebbar gelagerten, aus Kunststoff einstückig geformten Führungskörper 11 auf, der in Fig. 5 in Seitenansicht einzeln dargestellt ist. Dieser Führungskörper 11 weist beidseits je eine durchgehende Führungshülse 12 und 13 auf, mit denen der Führungskörper 11 längsverschiebbar auf den Stangen 7 gelagert ist. Die Führungshülsen 12 und 13 sind durch eine Platte 15 miteinander verbunden. An jeder der Führungshülsen 12 und 13 erstreckt sich je eine äußere Rippe 16 und je eine innere Rippe 17, die sich in gegenseitigem Abstand zueinander parallel in Sitzlängsrichtung erstrecken und senkrecht zu der die Achsen der Führungshülsen 12, 13 verbindenden Ebene verlaufende Ebenen definieren. Im hinteren Bereich jedes Paares der Rippen 16 und 17 sind Bohrungen 18 bzw. 19 vorgesehen, die miteinander fluchten, so daß an jedem Rippenpaar eine Durchgangsöffnung für je einen Lagerbolzen 21 geschaffen wird, die zur Bildung einer Schwenklagerung des Polstertragkörpers 5 am Führungskörper 11 vorgesehen sind. An ihrem den Bohrungen 18, 19 entgegengesetzten vorderen Randbereich weisen die Rippen 16 und 17 Einschnitte 23 auf, die miteinander fluchtende Rastkerben bilden, die Teil eines Rastmechanismusses sind, der es ermöglicht, den über die Lagerbolzen 21 am Führungskörper 11 schwenkbar gelagerten Polstertragkörper 5 in gewählter Schwenkposition lösbar festzustellen, was nachfolgend noch näher beschrieben wird.

Die Führungshülsen 12 und 13 weisen in ihrem hinteren Endbereich Schlitzöffnungen 25 auf, durch die hindurch je eine auf jede Führungshülse 12 und 13 aufgesteckte Rastfeder 26 mit ihrem einen Schenkel 27 auf die zugeorgnete Stange 7 drückt. Diese ist in dem der Schlitzöffnung 25 zugewandten Oberflächenbereich mit eingearbeiteten Rastkerben 28 und 29 versehen, in die der Schenkel 27 der Rastfedern 26 einrasten kann. Eine der seitlichen Begrenzungsflächen der Rastkerben 28 und 29 bildet eine geneigt verlaufende Rampe, so daß bei einer ausreichend hohen, in Längsrichtung wirksamen Kraft die Schenkel 27 der Rastfedern 26 gegen deren Federkraft durch Anlaufen an der Rampenfläche aus den Rastkerben 28 oder 29 austreten und dadurch die Verrastung gelöst wird.

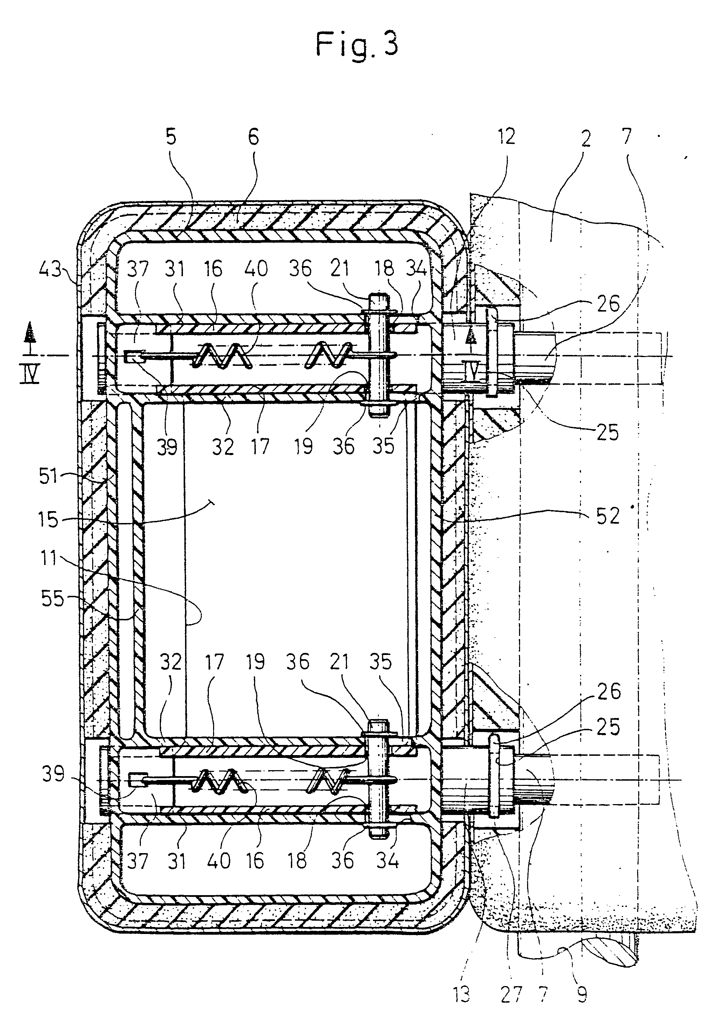

Der Polstertragkörper 5 weist für die Zusammenwirkung mit den Rippen 16 und 17 jedes Rippenpaares des Führungskörpers 11 je ein Rippenpaar mit zueinander und zu den Rippen 16 und 17 parallelen Rippen 31 und 32 auf, die mit ihren einander zugekehrten Innenflächen auf den Außenflächen der Rippen 16 bzw. 17 verschiebbar geführt sind. In ihren hinteren Bereichen, die in dem in Fig. 2 und 3 dargestellten, zusammengebauten Zustand auf die Bohrungen 18 und 19 der Rippen 16 bzw. 17 ausgerichtet sind, weisen die Rippen 31 und 32 des Polstertragkörpers 5 Langlöcher 34 bzw. 35 auf, die miteinander fluchten, sich in der durch die Längsachse der Führungshülsen 12, 13 definierten Längsrichtung erstrecken und von·den Lagerbolzen 21 durchgriffen sind. Sicherungsringe 36, die an den Außenseiten der Rippen 31 und 32 anliegen, sichern die Lagerbolzen 21 gegen axiales Verschieben.

In ihrem den Langlöchern 34 und 35 entgegengesetzten vorderen Endbereich ist jedes Paar der Rippen 31 und 32 durch eine Rastplatte 37 verbunden, die Teil des Rastmechanismusses für die Schwenklagerung des Polstertragkörpers 5 am Führungskörper 11 bilden und bei der in Fig. 2 und 3 gezeigten Schließstellung des Rastmechanismusses in die als Rastkerben dienenden Einschnitte 23 der Rippen 16 und 17 des Führungskörpers 11 eingreifen. Jede der Rastplatten 37 weist einen Durchbruch 39 auf, in den ein Ende einer Zugfeder 40 eingreift, deren anderes Ende am zugeordneten Lagerbolzen 21 verankert ist. Diese Zugfedern 40 wirken als vorgespannte Rückholfedern, die den Polstertragkörper 5 relativ zum Führungskörper 11 kraftschlüssig in der in Fig. 2 und 3 dargestellten, der Schließstellung des Rastmechanismusses entsprechenden Stellung halten, in der die Rastplatten 37 mit ihren den Einschnitten 23 zugekehrten Rändern mit denselben in Rasteingriff sind und die Langlöcher 34 und 35 der Rippen 31 bzw. 32 mit ihren, bezogen auf die Sitzlängsrichtung, vorderen Rändern an den Lagerbolzen 21 anliegen. Wird der Polstertragkörper 5 gegen die Kraft der Feder 40 nach vorn gezogen, so daß die Langlöcher 34 und 35 mit ihren hinteren Rändern an den Lagerbolzen 21 anliegen, so sind die Rastplatten 37 aus den Einschnitten 23 ausgehoben und der Rastmechanismus ist in seinem geöffneten oder gelösten Zustand, so daß der Polstertragkörper 5 um die durch die Lagerbolzen 21 gebildete Schwenkachse relativ zum Führungskörper 11 verschwenkbar ist.

Wie aus Fig. 2 und 3 zu ersehen ist, ist das Polster 6 des Polstertragkörpers 5 mit einem äußeren Bezug 43 versehen, der bis zum unteren Rand des Polstertragkörpers 5 herabgezogen ist. Dieser weist längs seines unteren Randes eine nach unten offene Nut 44 auf, in die ein Verstärkungsstreifen 45 eingreift, der längs des Endbereichs des Bezugs 43 an diesem befestigt ist.

Aus den Fig. 2 und 4 ist zu ersehen, daß der Polstertragkörper 5 in seinen quer zur Sitzlängsrichtung verlaufenden Seitenwänden 51 und 52 im Bereich zwischen den Rippen 31 und 32 im unteren Bereich Aussparungen 53 bzw. 54 aufweist, durch die hindurch sich die Führungshülsen 12 und 13 des Führungskörpers 11 erstrecken. Im Bereich dieser Aussparungen 53, 54 ist auch die nach unten offene Nut 44 unterbrochen. Im Bereich zwischen den inneren Rippen 32 des Polstertragkörpers 5 ist an der Hinterseite seines nach unten offenen Randes eine Leiste 55 angeformt, die als Handhabe vom Sitzbenutzer hintergriffen werden kann, um den Polstertragkörper zum Durchführen der Längseinstellung und/oder zum Lösen des Rastmechanismusses für die Einstellung der Schwenklage zu bewegen.

Die Betätigung des Rastmechanismusses geschieht, wie bereits erwähnt, durch Ziehen des Polstertragkörpers 5 relativ zum Führungskörper 11 nach vorn gegen die Kraft der Rückholfedern 40, wobei der Rand der Rastplatten 37 außer Eingriff mit den als Rastkerben dienenden Einschnitten 23 der Rippen 16, 17 des Führungskörpers 11 kommt. Der Polstertragkörper 5 kann nun in die gewünschte Schwenkstellung um die durch die Lagerbolzen 21 definierte Schwenkachse geschwenkt und durch Einrasten der Rastplatten 37 in die dieser Schwenklage entsprechenden Einschnitte 23 wieder verrastet werden, wobei der Rasteingriff bei Freigabe des Polstertragkörpers 5 durch die Kraft der Rückholfedern 40 herbeigeführt wird. Wenn der Sitzbenutzer an der Leiste 55 mit einer die Kraft der Rückholfedern 40 übersteigenden Kraft zieht, so daß es zur Anlage der hinteren Ränder der Langlöcher 34 und 35 an den Lagerbolzen 21 kommt und die durch den Benutzer aufgebrachte Zugkraft somit formschlüssig vom Polstertragkörper 5 auf den Führungskörper 11 übertragen wird, kommt es zu einem Ausrasten der Schenkel 27 der Rastfedern 26 aus den Kerben 28, so daß sich eine Längsverstellung des Polstertragkörpers 5 auf den Stangen 7 ergibt.

In den Fig. 2 und 3 ist ein Ausführungsbeispiel dargestellt, bei dem das Polster 6 und der zugehörige Polstertragkörper 5 an ihrer Oberseite im wesentlichen eben und waagerecht geformt sind. In Abwandlung könnte das Polster 6 im hinteren Bereich dicker ausgeführt sein und der Polstertragkörper in diesem Bereich eine entsprechend geringere Höhe besitzen, wie in Fig. 2 durch die gestrichelte Doppellinie dargestellt ist.

Fig. 6 zeigt schematisch vereinfacht ein weiteres Ausführungsbeispiel, bei dem die Schenkelstütze 104 an ihrer dem hinteren Abschnitt 102 des Sitzteils zugekehrten Endfläche 114 in der gleichen Weise nach rückwärts geneigt verläuft wie die ihr zugekehrte vordere Endfläche 120 des Abschnitts 102. Dabei ist die Stärke der Neigung der Endflächen 114 und 120 so gewählt, daß auch bei dem größtmöglichen Abstand der Schenkelstütze 104 vom Abschnitt 102, wenn also die Tragvorrichtung der Schenkelstütze 104 auf den Stangen 107 die am weitesten nach vorn vorgezogene Stellung erreicht hat, sich Schenkelstütze 104 und hinterer Abschnitt 102 des Sitzteils überlappen, so daß sich bei Blickrichtung von oben die Auflagefläche optisch als ununterbrochen darstellt. Zur Bildung des geneigten Verlaufs der Endfläche 114 kann das Polster der Schenkelstütze 104 über den zugehörigen Polsterträger nach hinten überstehend ausgebildet sein, wobei die Größe des Überstands von oben nach unten abnimmt.

Bei beiden vorstehend beschriebenen Ausführungsbeispielen ist der Rastmechanismus zwischen Polstertragkörper 5 und dem als dessen Tragvorrichtung dienenden Führungskörper 11 so gestaltet, daß das vorspringende Rastelement, bei den gezeigten Ausführungsbeispielen die Rastplatte 37, am Tragkörper 5 vorgesehen ist und die Ausnehmungen oder Vertiefungen für den Eingriff des vorspringenden Rastelements an dem Führungskörper 11 der Tragvorrichtung ausgebildet sind. Die Anordnung kann in Abwandlung hierzu auch so getroffen sein, daß das vorspringende Rastelement, beispielsweise in Form eines vorspringenden Zapfens, an der Tragvorrichtung angeordnet ist und daß im auf den Zapfen ausgerichteten Bereich der vorderen Wandung des Polstertragkörpers passende Löcher für den wahlweisen Eingriff des Zapfens vorgesehen sind.

Die durch die Bohrungen 18 in den Rippen 16 und 17 des Körpers 11 definierte Schwenkachse 21 des Polsterträgers, die bei den gezeigten Beispielen oberhalb der Führungshülsen 12, 13 für die Stangen 7 gelegen ist (Fig. 5), könnte in Abwandlung des beschriebenen Ausführungsbeispiels auch unterhalb der Führungshülsen 12 und 13 gelegen sein.

Ferner könnte jede der aus Stange 7 und zugeordneter Hülse 12 oder 13 gebildeten Führungen auch durch ein Schienenpaar aus zwei ineinandergreifenden Schienen ersetzt sein, die ähnlich gestaltet sein können wie die zur Sitzlängsverstellung üblicherweise verwendeten Schienen.

**Patentansprüche**

1. Fahrzeugsitz mit einer Schenkelstütze, bei dem
a) die Schenkelstütze relativ zu dem eine Rückenlehne (1) tragenden hinteren Abschnitt (2 ; 102) des Sitzteils sowohl in Sitzlängsrichtung als auch um eine in Sitzquerrichtung verlaufende Achse (21) verstellbar und in wählbarer Position feststellbar ist ;
b) das Polster der Schenkelstütze auf einem Polsterträger (3) aufliegt, der um die in Querrichtung verlaufende Achse (21) schwenkbar an einer Tragvorrichtung gelagert ist ;
c) die Tragvorrichtung von mindestens zwei mit dem Gestell des hinteren Abschnittes (2 ; 102) des Sitzteils fest verbundenen und von diesem nach vorne ragenden Trägern (7), die in einem Abstand nebeneinander und zueinander parallel verlaufen, längsverschiebbar und in wählbaren Positionen feststellbar getragen ist, dadurch gekennzeichnet, daß
d) der Polsterträger (3) aus zwei nebeneinander angeordneten Polstertragkörpern (5) besteht, von denen jeder ein vom Polster (6) des anderen Polstertragkörpers (5) getrenntes Polster (6) trägt,
e) daß jeder Polstertragkörper (5) an je einem von zwei nebeneinander angeordneten, von wenigstens je zwei der Träger (7) getragenen Führungskörpern (11) gelagert ist,
f) daß jeder Polstertragkörper (5) an dem zugehörigen Führungskörper (11), vom anderen Polstertragkörper (5) unabhängig, um die Querachse (21) schwenkbar gelagert ist,
g) daß jeder Führungskörper (11) mittels eines Rastmechanismusses, der am Führungskörper (11) und am Polstertragkörper (5) vorgesehene Rastelemente (37 bzw. 23) aufweist, unabhängig vom anderen Führungskörper (11) in den wählbaren Schwenkstellungen festlegbar ist und
h) daß jeder der beiden Führungskörper (11) eine ihn auf den Trägern (7) in der gewählten Position haltende, lösbare Haltevorrichtung (26 bis 29) aufweist.

2. Fahrzeugsitz nach Anspruch 1, dadurch gekennzeichnet, daß die Träger Stangen (7 ; 107) sind, deren hinterer Endabschnitt (8) mit einer im Bereich des vorderen Endes des hinteren Abschnitts (2 ; 102) des Sitzteils angeordneten Traverse (9), vorzugsweise durch Einpressen, fest verbunden ist.

3. Fahrzeugsitz nach Anspruch 2, dadurch gekennzeichnet, daß die Stangen (7) für jede einstellbare Position der Tragvorrichtung eine Kerbe (28, 29) aufweisen, in welche ein Schenkel (27) einer als lösbare Haltevorrichtung vorgesehenen Rastfeder (26) einrasten kann, der in einen quer zur Verschieberichtung verlaufenden Schlitz (25) in der Wandung eines die Stange (7 ; 107) aufnehmenden Führungskanals (12, 13) der Tragvorrichtung eingreift.

4. Fahrzeugsitz nach einem der Ansprüche 1 bis 3, dadurch gekennzeichnet, daß zur schwenkbaren Lagerung des Polstertragkörpers (5) der Schenkelstütze an den Führungskörper (11) im einen dieser beiden Teile die Schwenkachse (21) gelagert ist und der andere Teil die Schwenkachse (21) drehbar und quer zu ihrer Längsachse verschiebbar aufnehmende Langlöcher (34, 35) aufweist und daß sich die Langlöcher (34, 35) in derjenigen Richtung erstrecken, in welcher der Polsterträger (3) der Schenkelstütze relativ zur Tragvorrichtung zum Schließen und Öffnen des die ineinandergreifenden Rastelemente (37, 23) aufweisenden Rastmechanismusses zu bewegen ist.

5. Fahrzeugsitz nach Anspruch 4, dadurch gekennzeichnet, daß sich die Langlöcher (34, 35) in Sitzlängsrichtung oder in einem spitzen Winkel zu dieser Richtung erstrecken und der Polsterträger (3) der Schenkelstütze für ein Lösen des Rastmechanismusses entgegen der Kraft einer vorgespannten Rückholfeder (40) in Richtung der Langlöcher (34, 35) vom hinteren Abschnitt (2 ; 102) des Sitzteils wegbewegbar ist.

6. Fahrzeugsitz nach einem der Ansprüche 1 bis 5, dadurch gekennzeichnet, daß der Polsterträger (3) der Schenkelstütze an seinem vorderen, unteren Rand eine sich in Querrichtung erstreckende, nach unten hin freiliegende Leiste (55) als hintergreifbare Handhabe aufweist.

7. Fahrzeugsitz nach einem der Ansprüche 1 bis 6, dadurch gekennzeichnet, daß der Polsterträger (3) eine längs seines unteren Randes verlaufende, nach unten offene Nut (44) aufweist, in welche ein Verstärkungsstreifen (45) eingreift, der längs des unteren Randes des Bezugsstoffes (43) des Polsters (6) der Schenkelstütze festgelegt ist.

8. Fahrzeugsitz nach einem der Ansprüche 1 bis 7, dadurch gekennzeichnet, daß der Polsterträger (3) der Schenkelstütze eine gegen sein hinteres Ende hin abnehmende Höhe und das von ihm getragene Polster eine gegen das hintere Ende hin entsprechend zunehmende Dicke hat.

9. Fahrzeugsitz nach einem der Ansprüche 1 bis 7, dadurch gekennzeichnet, daß die einander zugekehrten Endflächen (114 bzw. 120) der Schenkelstütze (104) und des hinteren Abschnitts (102) des Sitzteils gegenüber der durch die Verschieberichtung der Tragvorrichtung definierten Ebene im gleichen Sinne und vorzugsweise im gleichen Maße geneigt sind.

10. Fahrzeugsitz nach Anspruch 9, dadurch gekennzeichnet, daß auch bei einem größtmöglichen Abstand der Schenkelstütze (104) vom hinteren Abschnitt (102) des Sitzteils letzterer und die Schenkelstütze (104) sich überlappen.

11. Fahrzeugsitz nach Anspruch 10, dadurch gekennzeichnet, daß das Polster der Schenkelstütze (104) über deren Polsterträger nach hinten übersteht und der überstehende Teil die durch die Neigung bedingte Abschrägung an seiner Unterseite aufweist.

12. Fahrzeugsitz nach einem der Ansprüche 1 bis 11, dadurch gekennzeichnet, daß die Tragvorrichtung und der Polsterträger (3) Kunststoffkörper sind.

13. Fahrzeugsitz nach einem der Ansprüche 1 bis 12, dadurch gekennzeichnet, daß sowohl die Führungskörper (11) als auch die Polstertragkörper (5) je gleich ausgebildete, einstückige Teile aus Kunststoff sind.

**Claims**

1. Vehicle seat comprising a thigh support, wherein

a) the thigh support is adjustable in relation to a rear portion (2 ; 102) of the seat part supporting a back rest (1), both in the longitudinal direction of the seat and also in an axis (21) extending in the transverse direction of the seat and can be locked in a preselectable position ;

b) the padding of the thigh support rests on a padding support (3) which is mounted on a supporting device to pivot about the axis (21) which extends in a transverse direction ;

c) the supporting device of at least two bearers (7) which are rigidly connected to the frame of the rear portion (2 ; 102) of the seat part from which they project forwardly, being disposed at a distance from and adjacent each other in a parallel relationship, being longitudinally displaceable and capable of being locked in selectable positions, characterised in that

d) the padding carrier (3) consists of two adjacently disposed padding carrier members (5) of which each carries a padded member (6) which is separate from the padded member (6) of the other padding carrier member (5),

e) in that each padding carrier member (5) is mounted on in each case one of two adjacently disposed guide members (11) supported by at least two of the bearers (7),

f) each padding carrier member (5) is mounted on the associated guide member (11) to be pivotable about the transverse axis (21) independently of the other padding carrier member (5),

g) in that each guide member (11) can be locked in the selectable pivoted positions and independently of the other guide member (11), by means of a ratchet mechanism which comprises ratchet elements (37, 23) provided on the guide member (11) and on the padding carrier member (5), and

h) in that each of the two guide members (11) comprises a separable retaining device (26 to 29) which maintains it in the selected position on the bearers (7).

2. A vehicle seat according to Claim 1, characterised in that the bearers are rods (7 ; 107) of which the rear end portion (8) is rigidly connected preferably by a pressing operation to a crossmember (9) disposed in the region of the front end of the rear portion (2 ; 102) of the seat part.

3. A vehicle seat according to Claim 2, characterised in that the bars (8) for each adjustable position of the bearer device comprise a notch (28, 29) into which it is possible for an arm (27) of a ratchet spring (26) which is provided as a separable supporting device to engage; the said ratchet spring (26) engaging in the wall of a guide passage (12, 13) of the carrier device which accommodates the bar (7 ; 107) and which extends transversely to the direction of displacement.

4. A vehicle seat according to one of Claims 1 to 3, characterised in that for pivotable mounting of the padding carrier member (5) of the thigh support on the guide member (11), the pivot axis (21) is mounted in one of these two parts, the other part comprising elongated holes (34, 35) which accommodate the pivot axis (21) in such a way that the latter is rotatable and displaceable transversely to its longitudinal axis and in that the elongated holes (34, 35) extend in that direction in which the padding carrier (3) of the thigh support can be moved relatively to the supporting device in order to close and open the ratchet mechanism which comprises the inter-engaging ratchet elements (37, 23).

5. A vehicle seat according to Claim 4, characterised in that the elongated holes (34, 35) extend in the longitudinal direction of the seat or at an acute angle to this direction and in that the padding carrier (3) of the thigh support is, for detachment of the ratchet mechanism against the force of a pretensioned restoring spring (40), adapted for movement in the direction of the elongated holes (34, 35) and away from the rear portion (2 ; 102) of the seat part.

6. A vehicle seat according to one of Claims 1 to 5, characterised in that the padding carrier (3) of the thigh support comprises at its front bottom edge and extending in a transverse direction a downwardly exposed strip (55) to serve as a handle behind which it is possible to grip.

7. A vehicle seat according to one of Claims 1 to 6, characterised in that the padding carrier (3) has extending along its bottom edge a downwardly open groove (44) engaged by a reinforcing strip (45) which is fixed along the bottom edge of the covering material (43) of the padding (6) on the thigh support.

8. A vehicle seat according to one of Claims 1 to 7, characterised in that the padding carrier (3) of the thigh support is of a height which diminishes towards its rear end while the padding carried by it is of a thickness which increases correspondingly towards the rear end.

9. A vehicle seat according to one of Claims 1 to 7, characterised in that the mutually facing end surfaces (114, 120) of the thigh support (104) and of the rear portion (102) of the seat part are inclined in the same direction and preferably by the same amount in respect of the plane defined by the direction of displacement of the carrier device.

10. A vehicle seat according to Claim 9, characterised in that even when the thigh support (104) is spaced apart by the greatest possible amount from the rear portion (102) of the seat part, this latter and the thigh support (104) overlap.

11. A vehicle seat according to Claim 10, characterised in that the padding on the thigh support (104) projects rearwardly beyond the padding carrier and in that the projecting portion comprises on its underside the chamfer necessitated by the inclination.

12. A vehicle seat according to one of Claims 1 to 11, characterised in that the carrier device and the padding carrier (3) are synthetic plastics members.

13. Vehicle seat according to Claims 1 to 12, characterised in that both the guide members (11) and the padding carrier members (5) are each similarly constructed one piece parts made of plastics.

## Revendications

1. Siège de véhicule comportant un appui-cuisse, dans lequel :

a) l'appui-cuisse est réglable par rapport à la partie arrière (2 ; 102), supportant un dossier (1) de la structure d'assise aussi bien dans la direction longitudinale du siège qu'autour d'un axe (21) orienté dans la direction transversale du siège et peut être fixé dans la position choisie ;

b) le rembourrage de l'appui-cuisse repose sur un support de rembourrage (3) qui est monté sur un dispositif porteur de façon à pouvoir pivoter autour de l'axe (21) orienté dans la direction transversale ;

c) le dispositif porteur est supporté, avec possibilité de déplacement longitudinal et de blocage dans des positions sélectionnées, par au moins deux membrures (7), reliées rigidement au châssis de la partie arrière (2 ; 102) de la structure d'assise et faisant saillie vers l'avant de cette dernière, en étant placées parallèlement entre elles et à distance l'une de l'autre, caractérisé en ce que :

. d) le support de rembourrage (3) se compose de deux corps porteurs de rembourrage (5) placés l'un à côté de l'autre et supportant chacun un rembourrage (6) séparé du rembourrage (6) de l'autre corps porteur de rembourrage (5),

e) en ce que chaque corps porteur de rembourrage (5) est monté sur l'un, respectif, de deux corps de guidage (11), disposés l'un à côté de l'autre et supportés chacun par au moins deux des supports (7),

f) en ce que chaque corps porteur de rembourrage (5) est monté sur le corps de guidage associé (11) de façon à pouvoir pivoter autour de l'axe transversal (21), indépendamment de l'autre corps porteur de rembourrage (5),

g) en ce que chaque corps de guidage (11) peut être fixé indépendamment de l'autre corps de guidage (11) dans les positions de pivotement sélectionnées au moyen d'un mécanisme d'arrêt, qui comporte des éléments d'arrêt (37 ou 23) prévus sur le corps de guidage (11) et sur le corps porteur de rembourrage (5), et

h) en ce que chacun des deux corps de guidage (11) comporte un dispositif de retenue déclenchable (26 à 29) qui le maintient dans la position sélectionnée sur les supports (7).

2. Siège de véhicule selon la revendication 1, caractérisé en ce que les supports sont des barres (7 ; 107) dont la partie extrême arrière (8) est reliée rigidement, de préférence par emmanchement, à une traverse (9) disposée dans la zone de l'extrémité avant de la partie arrière (2 ; 102) de la structure d'assise.

3. Siège de véhicule selon la revendication 2, caractérisé en ce que les barres (7) comportent, pour chaque position réglable du dispositif porteur, une encoche (28, 29) dans laquelle peut s'accrocher une branche (27) d'un ressort d'arrêt (26), prévu comme dispositif de retenue déclenchable, qui s'engage dans une fente (25), orientée perpendiculairement à la direction de translation et ménagée dans la paroi d'un canal de guidage (12, 13), recevant la barre (7 ; 107), du dispositif porteur.

4. Siège de véhicule selon une des revendications 1 à 3, caractérisé en ce que, pour le montage pivotant du corps porteur de rembourrage (5) de l'appui-cuisse sur le corps de guidage (11), le pivot (21) est installé dans une de ces deux parties tandis que l'autre partie comporte des trous oblongs (34, 35) recevant le pivot (21) de façon qu'il puisse tourner et se déplacer en translation perpendiculairement à son axe longitudinal et en ce que les trous oblongs (34, 35) sont orientés dans la direction dans laquelle le support de rembourrage (3) de l'appui-cuisse peut se déplacer par rapport au dispositif porteur pour l'ouverture et la fermeture du mécanisme d'arrêt comportant les éléments d'arrêt (37, 23) s'accrochant l'un dans l'autre.

5. Siège de véhicule selon la revendication 4, caractérisé en ce que les trous oblongs (34, 35) s'étendent dans la direction longitudinale du siège ou bien selon un angle aigu par rapport à cette direction et le support de rembourrage (3) de l'appui-cuisse peut, en vue d'un déblocage du mécanisme d'arrêt, être écarté de la partie arrière (2 ; 102) de la structure d'assise dans la direction des trous oblongs (34, 35) en opposition à la force d'un ressort de rappel précontraint (40).

6. Siège de véhicule selon une des revendications 1 à 5, caractérisé en ce que le support de rembourrage (3) de l'appui-cuisse comporte, sur son bord inférieur avant, une nervure (55) orientée dans la direction transversale, faisant saillie librement vers le bas et servant de poignée pouvant être saisie par l'arrière.

7. Siège de véhicule selon une des revendications 1 à 6, caractérisé en ce que le support de rembourrage (3) comporte une rainure (44) s'étendant le long de son bord inférieur, ouverte vers le bas et dans laquelle s'accroche une barrette de renforcement (45), qui est fixée le long du bord inférieur de la matière de revêtement (43) du rembourrage (6) de l'appui-cuisse.

8. Siège de véhicule selon une des revendications 1 à 7, caractérisé en ce que le support de rembourrage (3) de l'appui-cuisse a une hauteur diminuant en direction de son extrémité arrière tandis que le rembourrage porté par lui a une épaisseur augmentant en correspondance en direction de l'extrémité arrière.

9. Siège de véhicule selon une des revendications 1 à 7, caractérisé en ce que les surfaces extrêmes (114, 120), dirigées l'une vers l'autre, de l'appui-cuisse (104) et de la partie arrière (102) de la structure d'assise sont inclinées dans le même sens et de préférence du même degré par rapport au plan défini par la direction de translation du dispositif porteur.

10. Siège de véhicule selon la revendication 9, caractérisé en ce que, même pour le plus grand espacement possible de l'appui-cuisse (104) par rapport à la partie arrière (102) de la structure d'assise, cette dernière et l'appui-cuisse (104) se recouvrent.

11. Siège de véhicule selon la revendication 10, caractérisé en ce que le rembourrage de l'appui-cuisse (104) dépasse du support de rembourrage de celui-ci vers l'arrière et la partie dépassante comporte sur son côté inférieur le biseautage nécessité par l'inclinaison.

12. Siège de véhicule selon une des revendications 1 à 11, caractérisé en ce que le dispositif porteur et le support de rembourrage (3) sont des corps en matière plastique.

13. Siège de véhicule selon une des revendications 1 à 12, caractérisé en ce qu'aussi bien les corps de guidage (11) que les corps porteurs de rembourrage (5) sont respectivement des éléments d'une seule pièce et de même structure en matière plastique.

Fig.1

1

2

II

II

3

Fig.2

# Fig. 3

## Fig.4

## Fig.5

## Fig.6

4